# EUROPEAN PATENT APPLICATION

(11) **EP 4 843 934 A1**
(43) Date of publication of application: **25.11.2026**
(21) Application number: 25177736.3
(22) Date of filing: 20.05.2025
(51) Int. Cl.: B65G 47/92, B65G 59/04

(54) **MAGNETIC SYSTEM FOR PICKING FERROMAGNETIC PIECES**

(71) Applicant: Universiteit Gent, 9000 Gent (BE)
(72) Inventor: SIANOV, Anatolii, 9052 Zwijnaarde (BE); CREVECOEUR, Guillaume, 9052 Zwijnaarde (BE)
(74) Representative: Winger

(57) **Abstract**

A system is provided for picking at least one ferromagnetic piece from a stack or an unstructured collection. The system comprises a magnet arrangement with at least one electromagnet, which is configured to generate an adjustable magnetic field that attracts the piece. A mechanical contact-sensing arrangement includes one or more contact sensors placed at or near the attraction surface of the magnet arrangement. These sensors are configured to produce signals that indicate mechanical effects caused by the magnetic attraction of the piece. A controller is operatively connected to the electromagnet and the sensors. The controller applies a magnetic field with both a base component and an oscillatory component. It monitors sensor signals to detect the presence of a piece, generates the base component to attach it, then reduces the base component to release additional pieces. When detachment is detected, it re-increases the field to clamp the remaining piece.

## Description

### Field of the invention

The invention relates to the field of automated material handling. More specifically, it relates to a magnetic system and method for picking ferromagnetic pieces, including from stacks or unstructured collections,

### Background of the invention

Automated manipulation of ferromagnetic pieces, such as metal sheets, remains a key challenge in industrial environments-particularly when the pieces are disordered, vary in shape, thickness, surface condition (e.g., oily or perforated), or are presented in unstructured collections rather than neat stacks. A central problem is how to reliably pick up at least one such piece-often just one-from an unstructured environment without prior knowledge of the sheet's properties or requiring manual configuration or training.

Multiple technologies have been developed to address aspects of this challenge, but each suffers from functional or structural limitations that restrict their applicability in dynamic or unknown conditions.

Suction cups create a vacuum to lift the top sheet from a stack. This method inherently targets only the uppermost sheet, minimizing the risk of picking multiple layers. However, suction-based systems are ineffective for perforated or textured sheets, where maintaining a vacuum seal is not possible. They also struggle with oily surfaces and require precise guidance to handle small sheets, especially when the dimensions approach those of the suction cup.

Magnetic sheet separators use static magnetic fields to repel stacked sheets, facilitating their separation. These devices are useful for preparing sheets for pickup but do not lift or transport them. As such, they must be paired with an additional gripping mechanism, increasing system complexity and cost.

Magnetic grippers employ permanent magnets (PM) or electromagnets (EM) to lift ferromagnetic sheets.

Permanent magnet grippers offer constant magnetic force but cannot adjust that force dynamically. This limits their ability to selectively pick individual sheets from a stack, especially when multiple sheets are unintentionally lifted together.

Electromagnetic grippers allow force adjustment via current control but typically require manual programming to adapt to different sheet types and configurations. These systems are energy-intensive due to the need for continuous power to maintain magnetic attraction, and their reliance on manual tuning reduces flexibility.

Electro-permanent magnets, such as those in the Schunk EMH series or Goudsmit's solutions, combine features of both PM and EM systems. These often incorporate basic ferromagnetic sheet detection-typically based on inductive sensing-but still require human intervention for setup and calibration.

Magswitch grippers represent a more advanced state of the art. They use rotating multipole permanent magnets to enable switching of the magnetic field and often include internal magnetic flux sensors. While these grippers allow for programmable activation and deactivation of the magnetic force, they still suffer from critical drawbacks:
- They require calibration for each sheet type and stack configuration.
- Operator input is needed to store and apply correct settings.
- The system lacks real-time adaptability and is thus not suitable for use in environments where sheet properties vary or where items are randomly oriented.
- The magnetic flux sensing is indirect and not sufficient to ensure reliable detection of gripping success in all conditions.

These limitations reveal a need for a more robust, self-adaptive gripping system capable of handling various ferromagnetic pieces in real time, especially in unstructured or dynamic environments.

### Summary of the invention

It is an object of embodiments of the present invention to provide a system and method for reliably picking at least one ferromagnetic piece from a stack or unstructured collection.

The above objective is accomplished by a method and device according to the present invention.

In a first aspect embodiments of the present invention relate to a system for picking at least one ferromagnetic piece from a stack or an unstructured collection. The system comprises a magnet arrangement including at least one electromagnet configured to produce an adjustable magnetic field to attract the piece. It further comprises a mechanical contact-sensing arrangement with one or more contact sensors positioned at or near the attraction surface of the magnet arrangement, configured to generate signals indicative of mechanical effects resulting from the electromagnetic attraction.

A controller is operatively connected to the electromagnet and contact sensor(s), and is configured to apply a time-varying magnetic field comprising a base component with a superimposed oscillatory component. While doing so, the controller monitors the sensor signals to detect when a ferromagnetic piece is present. It generates the base magnetic field component such that at least one ferromagnetic piece attaches. This may be done by increasing the base magnetic field component until the at least one ferromagnetic piece attaches or by starting with a high enough base magnetic field component for attaching the at least one ferromagnetic piece. Next, the controller reduces the base component while monitoring signals, allowing excess pieces to detach.

The controller then reclamps the remaining piece by re-increasing the base component when the signal drops below a predefined threshold.

It is an advantage of embodiments of the present invention that a ferromagnetic piece can be reliably picked from a stack or an unstructured collection, including from unstructured or disordered piles, without requiring complex tuning or manual intervention.

It is an advantage of embodiments of the present invention that the oscillatory component of the magnetic field enables fast and sensitive detection of changes in the attachment state of the ferromagnetic piece , allowing the system to re-clamp the ferromagnetic piece quickly-before it detaches or falls-thereby improving reliability and preventing handling errors.

It is an advantage of embodiments of the present invention that the system does not require prior knowledge of the physical properties of the ferromagnetic pieces, such as their dimensions, thickness, geometry, or surface conditions, making it highly adaptable to a wide range of ferromagnetic piece types.

It is an advantage of embodiments of the present invention that the combination of a time-varying magnetic field and contact-sensing feedback enables fully automated picking of thin ferromagnetic pieces , including those that are perforated, oily, or irregular in shape.

In embodiments of the present invention the contact sensors are tactile sensors. The tactile sensors may be deformable soft pressure sensors.

It is an advantage of embodiments of the present invention that the tactile sensors are deformable soft pressure sensors, which allows for sensitive and adaptive contact detection even on irregular or uneven surfaces of ferromagnetic piece. This enhances the accuracy and reliability of detecting the presence and attachment state of the ferromagnetic piece, particularly when dealing with thin, flexible, perforated, or oily materials.

In embodiments of the present invention that the tactile sensors are deformable soft pressure sensors. The Shore A hardness may for example be in a range between Shore A 8 and Shore A 40, more preferably between Shore A 8 and Shore A 25. The Shore A hardness may for example be 15.
In embodiments of the present invention the tactile sensors are based on pressure sensors encased in a rubber material.
In embodiments of the present invention the tactile sensors are MEMS barometric sensors, or equivalents.

In embodiments of the present invention the oscillatory component of the time-varying magnetic field has a frequency and amplitude selected to induce a detectable mechanical response of the at least one ferromagnetic piece by the contact-sensing arrangement.

It is an advantage of embodiments of the present invention that the oscillatory component of the magnetic field is selected within a frequency range and an amplitude range that induces detectable mechanical effects, such as vibrations or contact pressure variations, in a broad variety of ferromagnetic pieces. This enables reliable detection across ferromagnetic pieces of different sizes, thicknesses, and material properties, while minimizing false detections due to mechanical resonance or insufficient signal strength. By appropriately tuning the frequency and amplitude, the system ensures robust and sensitive monitoring, enhancing the accuracy and reliability of the piece-picking process without requiring detailed prior knowledge of the ferromagnetic piece characteristics.
It is an advantage of embodiments of the present invention that the oscillatory component of the time-varying magnetic field has a frequency in the range of 5 to 10 Hz. This frequency range ensures that the induced oscillations are sufficiently slow to allow reliable sensing by the contact sensors, yet fast enough to enable quick detection of when an additional ferromagnetic piece begins to detach. As a result, the system can rapidly reclamp the remaining ferromagnetic piece before it unintentionally falls, thereby improving the speed, reliability, and safety of the piece-picking process.

In embodiments of the present invention the controller is configured to detect the presence of the at least one ferromagnetic piece by applying a windowed signal processing technique on the signals from the one or more contact sensors.

In embodiments of the present invention the windowed signal processing technique may for example be a Fast Fourier Transform (FFT), a standard deviation analysis, or a windowed signal evaluation.

In embodiments of the present invention the controller is configured to actuate the magnet arrangement with a force oscillation amplitude that is a predefined percentage of the maximum available electromagnetic force or a predefined percentage of the maximum drive current of the electromagnet, such that the magnetic field is strong enough to induce detectable mechanical responses in the ferromagnetic piece.

It is an advantage of embodiments of the present invention that the oscillatory component of the magnetic field is strong enough to induce detectable mechanical responses in the ferromagnetic piece (e.g., vibrations or micro-movements) for reliable sensing, while remaining low enough to avoid unintended detachment or excessive motion of the ferromagnetic piece. By maintaining the oscillation amplitude at an optimized level, the system improves detection sensitivity and ensures stable ferromagnetic piece handling, enabling precise control over the attachment and release phases without compromising the clamping security or process efficiency. The oscillation amplitude may for example be up to 20% of the maximum current rating of the electromagnet, or more preferably up to 10%, depending on the sensitivity of the contact sensors and the characteristics of the ferromagnetic pieces being handled.

In embodiments of the present invention the controller is configured to reduce the base component of the magnetic field at a rate that decreases over time.

It is an advantage of embodiments of the present invention that the rate of reduction of the magnetic field strength decreases over time, allowing for a controlled and gradual detachment of ferromagnetic pieces.

This approach minimizes the risk of unintentionally releasing the final piece, improves the precision of singulation, and enhances the reliability of picking exactly one or a predetermined number of pieces, even when the stack or unstructured collection includes thin, flexible, or variably shaped components.

In embodiments of the present invention the magnet arrangement (110) comprises at least one electromagnet controlled by a current controller. The current controller is regulated by the controller (130). This may for example be done via a pulse-width modulated (PWM) signal.

In embodiments of the present invention the controller is configured to reduce the base component of the magnetic field at a decreasing rate when releasing additional ferromagnetic pieces and to re-increase the base component when a signal from one or more contact sensors indicates a loosening of the remaining ferromagnetic piece.

In embodiments of the present invention the magnet arrangement comprises a plurality of electromagnets, each electromagnet being individually driven by the controller.

It is an advantage of embodiments of the present invention that this configuration allows for selective and localized control of the magnetic field strength across different regions of the attraction surface. As a result, the system can adaptively target specific areas of a stack of ferromagnetic pieces, improving the accuracy and flexibility of the picking operation. It also enables better handling of ferromagnetic pieces with varying geometries, sizes, or positions, and facilitates more efficient separation of individual ferromagnetic pieces from the stack or unstructured collection. Additionally, the individual actuation of electromagnets provides opportunities for parallel or sequential picking processes in automated manufacturing environments.

In embodiments of the present invention the controller is configured to compare signals from at least two of the contact sensors to determine where a ferromagnetic piece is attached, and the controller is configured to only actuate the electromagnets where the ferromagnetic piece is attached.

In embodiments of the present invention the mechanical contact-sensing arrangement comprises a plurality of contact sensors distributed along different regions of the attraction surface of the at least one electromagnet.

It is an advantage of embodiments of the present invention that this spatial distribution of sensors enables detection of the presence and position of ferromagnetic pieces across the entire attraction surface, providing localized feedback for improved grasp control. It facilitates adaptive control strategies, such as localized clamping or release actions, leading to higher reliability and greater flexibility in handling stacks or unstructured collections of ferromagnetic pieces with diverse geometries or conditions.

In embodiments of the present invention the mechanical contact-sensing arrangement comprises one or more contact sensors that protrude beyond a plane defined by the attraction surface of the magnet arrangement. The protrusion is in a direction that comprises at least one component normal to the attraction surface, ensuring that the contact sensors extend outward from the magnetic plane. In embodiments of the present invention, the protrusion is substantially normal to the attraction surface.

It is an advantage of embodiments of the present invention that this configuration allows the contact sensors to directly engage with the ferromagnetic piece as it approaches or attaches, enabling highly sensitive and immediate detection of contact. It improves the reliability and precision of detecting whether a ferromagnetic piece has been successfully picked up, even in unstructured or variable stack conditions. Additionally, the protruding arrangement can enhance mechanical feedback regarding presence, orientation, and stability of a ferromagnetic piece, supporting more accurate control of clamping and release operations.

In a second aspect embodiments of the present invention relate to a method for picking at least one ferromagnetic piece from a stack or unstructured collection. The method comprises:
- providing a magnet arrangement comprising at least one electromagnet configured to produce an adjustable magnetic field that attracts at least one ferromagnetic piece,
- providing a mechanical contact-sensing arrangement comprising one or more contact sensors at or near an attraction surface of the at least one electromagnet, wherein the one or more contact sensors are configured for generating signals indicative of mechanical effects resulting from the electromagnetic attraction of the at least one ferromagnetic piece,
- applying a time varying magnetic field comprising a base component and an oscillatory component superimposed on the base component, while monitoring the signals from the one or more contact sensors to detect when at least one ferromagnetic piece is present at the attraction surface,
- generating the base component of the magnetic field such that at least one ferromagnetic piece attaches to the attraction surface,
- reducing the base component of the magnetic field while monitoring the at least one signal so that any additional ferromagnetic piece is released while at least one ferromagnetic piece remains attached to the attraction surface, and
- clamping the at least one remaining ferromagnetic piece by re-increasing the base component of the magnetic field when at least one of the signals is below a predefined threshold.

In embodiments of the present invention the step of reducing the base component of the magnetic field is done in three phases:
- a first phase at a first decrease rate wherein a first ferromagnetic piece is dropped,
- a second phase at a second decrease rate smaller than the first decrease rate wherein one or more subsequent ferromagnetic pieces are dropped,
- a third phase at a third decrease rate smaller than the second decrease rate, until at least one of the signals of the one or more contact sensors decreases below the predefined threshold.

It is an advantage of embodiments of the present invention that the step of reducing the base component of the magnetic field is performed in three distinct phases with progressively decreasing rates, allowing for fine-grained control over the detachment process of stacked ferromagnetic pieces or unstructured collections of ferromagnetic pieces. This graduated reduction ensures that multiple ferromagnetic pieces can be sequentially released in a controlled and predictable manner, minimizing the risk of accidental detachment of the last remaining ferromagnetic piece. By using a progressive decrease, the system can accurately detect the transition points through sensor signals, enabling timely reclamping before the last ferromagnetic piece falls. This improves the precision, reliability, and safety of single-piece picking operations, particularly when handling thin, flexible, or variably shaped ferromagnetic pieces in stacks or unstructured collections.
In embodiments of the present invention the controller is configured for executing the method steps according to the first, second, and third phase.

In embodiments of the present invention the method comprises determining a spatial distribution of the contact pressure signals from the one or more contact sensors to identify a position or orientation of the attached ferromagnetic piece.

It is an advantage of embodiments of the present invention that analysing the spatial distribution of sensor signals enables determination of where and how a ferromagnetic piece is attached to the magnet arrangement, allowing for more accurate control, targeted actuation, and possible correction of misaligned or partially picked pieces.

In embodiments of the present invention the method comprises processing the signals from the one or more contact sensors using a signal analysis technique.

In embodiments of the present invention the signal analysis technique may be a windowed processing technique. The signal analysis technique may for example comprise a frequency-domain analysis such as a Fast Fourier Transform (FFT), to detect oscillatory behavior indicative of the presence or release of one or more ferromagnetic pieces .

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

FIG. 1 illustrates a schematic block diagram of a system, for picking at least one ferromagnetic piece, in accordance with embodiments of the present invention.
FIG. 2 shows a flow diagram of a method for picking at least one ferromagnetic piece from a stack or unstructured collection using a variable magnetic field and contact sensing feedback, in accordance with embodiments of the present invention.
FIG. 3 illustrates an example of a robotic arm, to which the magnet arrangement and the mechanical contact-sensing arrangement are mounted, in accordance with embodiments of the present invention.
FIG. 4 provides a close-up view of the magnet arrangement and the mechanical contact-sensing arrangement mounted to the robotic arm, as depicted in FIG. 3.
FIG. 5 shows a graph of applied current and measured pressure over time during the singulation process, illustrating three phases of current reduction followed by reclamping, in accordance with embodiments of the present invention.
FIG. 6 presents a sensor signal profile indicating regions of no vibration, loose attachment, and unstable attachment, in accordance with embodiments of the present invention.
FIG. 7 displays pressure sensor readings during the detachment of a light plate, showing a transition from firm to loose attachment and subsequent reclamping, based on a threshold, in accordance with embodiments of the present invention.
FIG. 8 illustrates an embodiment of the electromagnetic gripper mounted on a robotic arm, showing how one ferromagnetic piece is released while another remains attached, in accordance with embodiments of the present invention.
FIG. 9 shows the gripper in use with thin ferromagnetic pieces in an unstructured bin, demonstrating the capability to pick a single piece from a disordered stack, in accordance with embodiments of the present invention.
FIG. 10 depicts a control pipeline for grasping a single plate, including pressure data processing, plate status classification, current modulation, and electromagnetic force control, in accordance with embodiments of the present invention.
FIG. 11 illustrates a gripper with three cylindrical electromagnets arranged in a triangular configuration, each surrounded by one or more contact sensors, enabling localized sensing and control, in accordance with embodiments of the present invention.

Any reference signs in the claims shall not be construed as limiting the scope.
In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present invention reference is made to a "ferromagnetic piece", reference is made to a body comprising ferromagnetic material, having at least one surface region suitable for magnetic attraction and mechanical sensing by the magnet arrangement and contact-sensing arrangement of the system. The ferromagnetic piece may include, without limitation, flat sheets, bent sheets, folded sheets, thin plates, wrapped sheet structures, hollow sections, thin-walled bars, or similar components. It is not required that the entire piece be flat; rather, it suffices that a region directly interacting with the magnet arrangement and contact sensors is substantially planar or locally flat. The ferromagnetic piece may exhibit variations in shape, thickness, and surface condition, provided that magnetic attraction and contact detection can be reliably performed at the relevant interaction surface.

Where in embodiments of the present invention reference is made to a "magnet arrangement comprising at least one electromagnet", reference is made to an arrangement that may include one or more electromagnets of any suitable shape for attracting ferromagnetic pieces. The electromagnets may have a rectangular, cylindrical, circular, elliptical, or other suitable cross-sectional shape. The invention is not limited to any specific magnet geometry, provided that the magnet arrangement is capable of producing a magnetic field over an attraction surface where ferromagnetic material is present and where contact sensing can be performed. The electromagnet shape may be selected depending on the application, the geometry of the ferromagnetic pieces to be picked, or specific design requirements of the picking system.

Where in embodiments of the present invention reference is made to "an attraction surface of the magnet arrangement", reference is made to the surface region near the magnet or magnets from which the magnetic field extends outward to attract ferromagnetic materials. In embodiments, the attraction surface may be a plane, curved surface, or three-dimensional region proximate to the magnet arrangement, depending on the field distribution.

Where in embodiments reference is made to "contact sensors positioned at or near the attraction surface", reference is made to sensors that are located sufficiently close to the region where ferromagnetic pieces are attracted and attached, such that mechanical contact or interaction with the attracted ferromagnetic piece can be detected.
In embodiments, the contact sensors may be embedded within, protruding from, adjacent to, or spaced a short distance from the physical structure of the magnet arrangement, depending on the desired sensitivity, mechanical configuration, and application constraints.

In a first aspect, embodiments of the present invention relate to a system (100) for picking at least one ferromagnetic piece from a stack or an unstructured collection. The stack or unstructured collection of ferromagnetic pieces may, for example, be located in a bin, tray, or similar container commonly used in industrial material handling or automated pick-and-place applications.

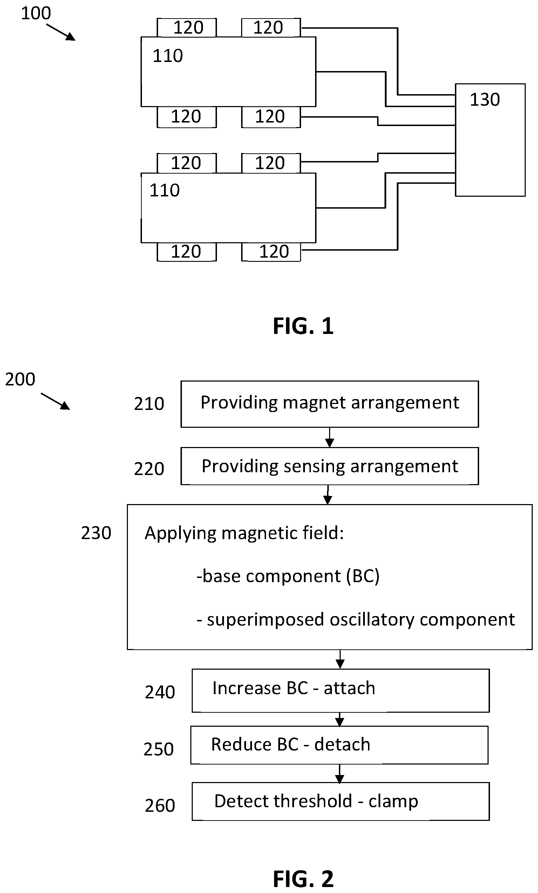

FIG. 1 shows a schematic block diagram of an exemplary system in accordance with embodiments of the present invention.

The system (100) comprises:
- a magnet arrangement comprising at least one electromagnet (110) configured to produce an adjustable magnetic field that attracts at least one ferromagnetic piece;
- a mechanical contact-sensing arrangement comprising one or more contact sensors (120) positioned at or near an attraction surface of the at least one magnet arrangement (110), and configured to generate signals indicative of mechanical effects resulting from the electromagnetic attraction of the at least one ferromagnetic piece;
- a controller (130) operatively connected to the at least one electromagnet (110) and the at least one contact sensor (120), the controller (130) being configured to:
   (i) apply a time-varying magnetic field comprising a base component and an oscillatory component superimposed on the base component, while monitoring the signals from the one or more contact sensors (120) to detect when at least one ferromagnetic piece is present at the attraction surface;
   (ii) generate the base component of the magnetic field such that at least one ferromagnetic piece attaches to the attraction surface;
   (iii) reduce the base component of the magnetic field while monitoring the signals, so that any additional ferromagnetic piece is released while at least one ferromagnetic piece remains attached to the attraction surface; and
   (iv) clamp the at least one remaining ferromagnetic piece by re-increasing the base component of the magnetic field when at least one of the signals is below a predefined threshold.
In a second aspect, embodiments of the present invention relate to a method (200) for picking at least one ferromagnetic piece from a stack or an unstructured collection. FIG. 2 shows a schematic block diagram of an exemplary system in accordance with embodiments of the present invention. The method comprises the steps of:
- providing (210) a magnet arrangement comprising at least one electromagnet (110) configured to produce an adjustable magnetic field that attracts at least one ferromagnetic piece;
- providing (220) a mechanical contact-sensing arrangement comprising one or more contact sensors (120) at or near an attraction surface of the at least one electromagnet (110), wherein the one or more contact sensors are configured for generating signals indicative of mechanical effects resulting from the electromagnetic attraction of the at least one ferromagnetic piece;
- applying (230) a time-varying magnetic field comprising a base component and an oscillatory component superimposed on the base component, while monitoring the signals from the one or more contact sensors to detect when at least one ferromagnetic piece is present at the attraction surface;
- generating (240) the base component of the magnetic field such that at least one ferromagnetic piece attaches to the attraction surface;
- reducing (250) the base component of the magnetic field while monitoring the at least one signal so that any additional ferromagnetic piece is released while at least one ferromagnetic piece remains attached to the attraction surface; and
- clamping (260) the at least one remaining ferromagnetic piece by re-increasing the base component of the magnetic field when at least one of the signals is below a predefined threshold.

In embodiments of the present invention, the mechanical effects resulting from the electromagnetic attraction of the at least one ferromagnetic piece may include, but are not limited to, contact pressure, deformation of a soft sensing layer, vibratory motion induced by an oscillating magnetic field, and dynamic loading variations. The one or more contact sensors may detect one or more of these mechanical effects to generate signals indicative of the presence, attachment, or detachment state of the ferromagnetic piece.

In embodiments of the present invention, the magnet arrangement initially attracts an undefined number of ferromagnetic pieces from the stack. The system does not determine or control the number of pieces initially attached. Instead, it relies on a controlled reduction of the magnetic field to sequentially release excess pieces. In embodiment of the present invention the process is configured to ensure that at least one piece remains attached to the attraction surface. In this context, "singulation" refers to retaining a single piece or at least a small number of pieces after the controlled release phase.

In embodiments of the present invention the system is configured for picking a predetermined number of ferromagnetic pieces from the stack. This may be achieved by dropping ferromagnetic pieces until the predefined number of pieces is reached.

If needed, additional features such as force sensing, indirect weight inference mechanisms (such as regulating the drive current via feedback control to maintain a target pressure value), or other counting mechanisms may be incorporated to determine whether a predefined number of pieces, different from one, is being handled. However, such features are not essential for the basic operation as presently claimed.

In embodiments of the present invention the controller (130) may be configured to process signals from one or more optical sensors, such as vibration-sensitive cameras, to determine information about the presence, position, orientation, or shape of the at least one ferromagnetic piece. By observing the vibratory motion of ferromagnetic piece products that are not occluded by the contact sensors or magnet, the system can extract valuable spatial information. This approach is particularly useful for distinguishing between different types of parts, determining alignment for stacking, and identifying whether a picked piece is correctly positioned within the gripper.

The closed-loop control of the magnetic gripping process using mechanical contact-sensing feedback in combination with a time-varying magnetic field allows the system or method to autonomously detect, attach, release, and re-clamp ferromagnetic pieces based on real-time feedback - without requiring pre-characterization of the material or manual force tuning. It enables the system or method to dynamically react to the mechanical behaviour of the piece under electromagnetic attraction, resulting in precise and adaptive ferromagnetic piece picking. This in contrast to conventional grippers-such as permanent magnetic, electromagnetic, or Magswitch-based systems-which typically require operator input to adjust the magnetic flux and to recalibrate for each new stack or type of ferromagnetic piece, the present invention allows real-time adaptation to varying material types and piece conditions, even in the absence of prior knowledge.

It is an advantage of embodiments of the present invention that no pre-calibration required for standard operation: The system automatically adjusts magnetic forces in response to real-time signals, eliminating the need for prior knowledge of ferromagnetic piece properties or manual setup. This eliminates the need for pre-set magnetic flux values or manual adjustments, allowing for operator-independent operation.

It is an advantage of embodiments of the present invention that the controller executes picking and releasing based on real-time sensor feedback, making the system deployable in variable environments. It is capable of handling arbitrarily shaped or randomly distributed pieces, such as those found in waste or bin-sorting applications, without requiring predefined configurations.

It is an advantage of embodiments of the present invention that the system or method can handle a wide variety of ferromagnetic pieces, including sheets of different sizes, thicknesses, surface conditions (e.g., oily or perforated), and shapes (e.g., flat, bent, folded). It can be used effectively in unpredictable or unstructured environments, such as recycling lines or production settings with mixed parts, where conventional systems may fail or require manual intervention.

It is an advantage of embodiments of the present invention that it is Controlled Sheet Release: The capability to gradually reduce the magnetic field while monitoring contact pressure allows precise singulation of one or more sheets from a stack or unstructured pile, minimizing accidental drop or double-picking.

It is an advantage that a system or method in accordance with embodiments of the present invention minimizes downtime by avoiding the need for recalibration, supporting high-throughput applications in automated production, logistics, or recycling.

An exemplary embodiment of the system (100) comprises a gripper designed to pick ferromagnetic pieces, such as flat metal sheets, while providing feedback on the adhesion state of the piece to the attraction surface. The system (100) comprises at least one electromagnet (110), such as an EHKAD01500 model, which forms part of a magnet arrangement. Positioned at or near the attraction surface of the magnet arrangement is a mechanical contact-sensing arrangement comprising one or more tactile pressure sensors (120).

In embodiments of the present invention wherein the contact sensors (120) are tactile sensors. The tactile sensors (120) may for example be deformable soft pressure sensors.

In the described exemplary embodiment, pressure-sensing pads are placed on both sides of each electromagnet (110). Each pad incorporates a MEMS barometric pressure sensor (e.g., MS5840-02BA from TE Connectivity), which is soldered to a small printed circuit board (PCB) and embedded into an elastic medium. The sensors are embedded in a rubber material with a Shore A hardness of approximately 15, for example using a vacuum-degassed Rision silicone mixture. A dome structure is used during casting to create the desired pad geometry. The sensors extend slightly beyond the attraction surface, enabling direct contact with the pieces.

In this exemplary embodiment of the present invention the controller (130) is implemented as a distributed system. Sensor signals are acquired via I²C communication and sampled using a microcontroller, such as a PJRC Teensy 4.0. The magnet arrangement is driven by a current controller, such as an ESCON 24V/2A module from Maxon Motors, which receives PWM signals from the microcontroller at a frequency of 1000 Hz.

The exemplary embodiment illustrates a modular system (100) wherein alternative components may be used depending on the application. For example the MEMS sensors, microcontrollers (e.g., Arduino, Texas Instruments, or Sony platforms), current regulators, and electromagnet types or shapes (e.g., bar or cylindrical) can be substituted or adapted as needed.

It is an advantage of embodiments of the present invention that the control logic implemented by the controller (130) enables autonomous singulation of ferromagnetic pieces.

In embodiments of the present invention, the controller is configured to increase the base component of the magnetic field upon detecting the presence of a ferromagnetic piece using vibrotactile sensing, until the piece is attached. Firm attachment is confirmed by detecting mechanical effects (e.g., pressure, deformation, reduced vibration) via the contact sensors.

In embodiments of the present invention, after lifting the attached pieces, the system performs a singulation step. The magnetic field is gradually reduced while sensor signals are monitored to determine when additional pieces detach, based on changes in contact pressure and vibration. When sensor signals indicate that only one piece remains attached-typically associated with minimal contact pressure variation-the base magnetic field is re-increased to clamp the remaining piece.

This controlled reduction followed by reclamping allows the system to isolate and retain a single piece reliably. The pressure sensors' deformable nature enables fine resolution of contact forces and air gaps, improving singulation precision.

In embodiments of the present invention the invention further comprises a sensing method for identifying movable ferromagnetic pieces within a stack or unstructured collection. This method uses a low-frequency oscillation applied to the magnet arrangement, superimposed on the base magnetic field. When the sensor array contacts a piece, vibrations resulting from the oscillation are mechanically transmitted and detected as pressure variations.

In embodiments of the present invention, the frequency and amplitude of the oscillatory component of the time-varying magnetic field can be selected based on the mechanical response characteristics of the at least one ferromagnetic piece and the contact-sensing arrangement.

The frequency and amplitude of the oscillatory component are preferably selected to induce detectable mechanical effects, such as vibration, micro-motion, or variations in contact pressure, which can be sensed by the contact sensors. In preferred embodiments, the frequency is selected based on the capabilities of the system, and may for example be limited by the sampling rate of the controller. Frequencies in the low Hertz range (e.g. several Hertz, e.g. between 1 and 20 Hz, e.g. between 5 and 10 Hz) have been found to reliably generate detectable responses across a wide range of ferromagnetic piece materials and configurations. The optimal frequency may depend on factors including, but not limited to, the mass, width, length, and thickness of the ferromagnetic piece; the mechanical stiffness and Shore hardness of the contact sensors; the elastic properties of any intermediate layers; and the dimensions of the magnet arrangement. Frequencies significantly lower than about 1 Hz generally result in insufficient vibrational signal strength for effective detection, while higher frequencies may, in certain cases, excite mechanical resonances in the ferromagnetic piece, influencing the detection behaviour. Accordingly, the frequency is preferably tuned to balance sensitivity, detection reliability, and stability across various ferromagnetic piece types and conditions.

In embodiments of the present invention the amplitude of the oscillatory component is selected such that the oscillation is strong enough to induce detectable mechanical responses by the contact sensing arrangement.

In embodiments of the present invention the controller (130) is configured to compare signals from at least two of the contact sensors to determine where a ferromagnetic piece is attached. The controller may, moreover, be configured to only actuate the electromagnets (110) where the ferromagnetic piece is attached.

In embodiments of the present invention the controller may for example be configured for applying signal processing techniques-such as windowed FFT, standard deviation analysis, or other windowed signal evaluations-to the sensor signals to determine the presence and location of a piece. If oscillatory behaviour is detected, the corresponding region of the magnet arrangement is selectively actuated to attract the piece, thereby avoiding unintended attachment of neighboring parts.

In implementations using multiple magnets, asynchronous actuation enables phase-based differentiation between rigid and loosely connected stacks. For example, phase differences in the residual sensor signal can be used to distinguish between a solid plate and multiple stacked pieces.

In embodiments of the present invention the mechanical contact-sensing arrangement comprises a plurality of contact sensors (120) distributed along different regions of the attraction surface of the at least one electromagnet (110). A method, in accordance with embodiments of the present invention, may for example comprise determining a spatial distribution of the contact pressure signals from the contact sensors (120) to identify a position or orientation of the attached ferromagnetic piece.

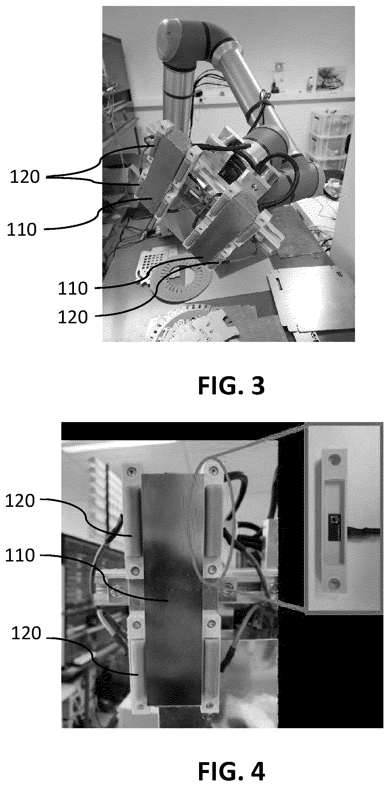

FIG. 3 illustrates an example of a robotic arm, to which the magnet arrangement (110) and the mechanical contact-sensing arrangement (120) are mounted, in accordance with embodiments of the present invention.

FIG. 4 shows a close-up view of the magnet arrangement (110) and the mechanical contact-sensing arrangement (120) as mounted on the robotic arm of FIG. 3.

In embodiments of the present invention the controller (130) is configured to reduce the base component of the magnetic field at a rate that decreases over time.

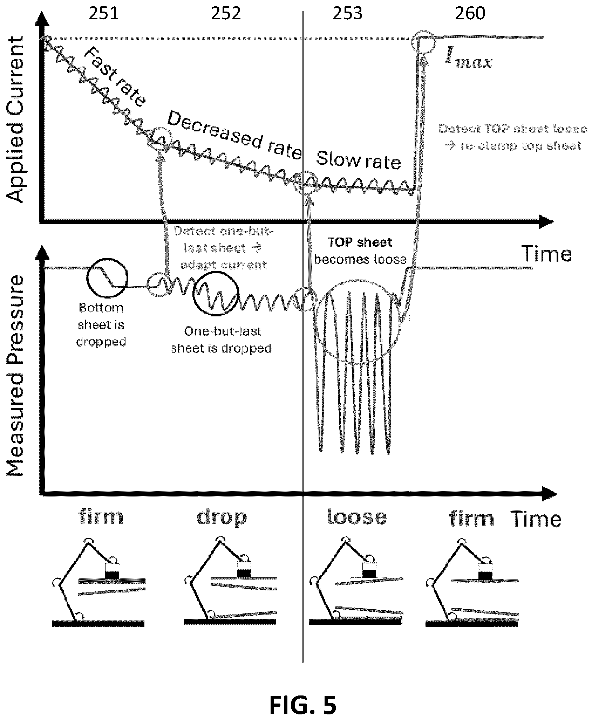

In embodiments of the present invention, the reduction of the base component of the magnetic field is performed in three phases, as illustrated in FIG. 5. The top graph of FIG. 5 plots the applied current over time, while the bottom graph shows the corresponding measured pressure signal obtained from the contact-sensing arrangement. Below the graphs, four schematic representations of the gripper system are provided, depicting the physical state of the system at different stages: firm, drop, loose, and firm.

During the first phase (251), the base component of the magnetic field is reduced at a fast rate, which causes the bottom ferromagnetic piece to be dropped, as indicated in the figure. The pressure signal remains relatively high during this initial reduction.

In the second phase (252), the rate of decrease of the magnetic field is reduced (i.e., decreased rate), and an additional, one-but-last ferromagnetic piece is dropped. This event can be identified by a corresponding drop in the pressure signal. The system may adapt the current dynamically based on sensor input to ensure proper detachment without releasing the final ferromagnetic piece.

In the third phase (253), the base component of the magnetic field is decreased at a slow rate, enabling fine-grained control. This phase is associated with the onset of looseness of the top ferromagnetic piece, which is detected through the increase in signal oscillations in the pressure readings. This region is marked in the figure as TOP sheet becomes loose.

Once the loosening is detected, the controller enters a reclamping phase (260), in which the base component of the magnetic field is increased again, restoring the maximum holding force (Iₘₐₓ). The pressure signal stabilizes, and the system transitions to a firm holding state, indicating successful singulation-i.e., exactly one ferromagnetic piece remains attached to the attraction surface.

In FIG. 5 the following annotations are present:
- "Detect one-but-last sheet → adapt current" during phase 252.
- "TOP sheet becomes loose" in phase 253.
- "Detect TOP sheet loose → re-clamp top sheet" in phase 260.

These elements illustrate specific control actions or transitions in system behavior which may be implemented in the controller based on sensor signals.

It is an advantage of embodiments of the present invention that the closed-loop control logic implemented in the controller ensures reliable singulation and prevents unintended detachment of the top ferromagnetic piece which in the example of FIG. 5 is a sheet.

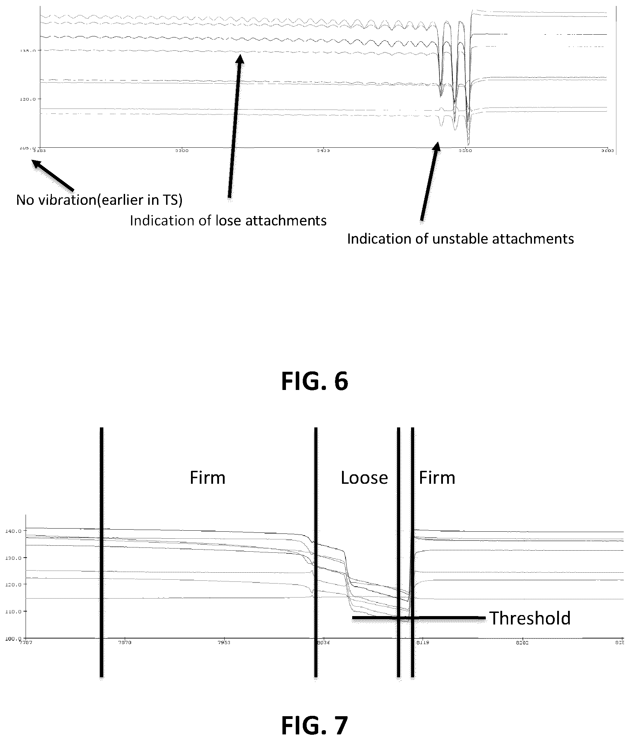

FIG. 6 illustrates an example of sensor signals showing the mechanical response of ferromagnetic pieces during a magnetic field reduction process. The horizontal axis represents time, and the vertical axis represents measured pressure or sensor output from a plurality of contact sensors. Three distinct phases of attachment behavior are highlighted:
- In the initial phase (left region), the sensor signals show no vibration, indicating firm attachment of the ferromagnetic piece(s) to the magnet arrangement.
- In a subsequent phase, a low-amplitude oscillatory pattern appears, which is indicative of loose attachments of one or more ferromagnetic pieces.
- Toward the right, a region of increased oscillatory activity is visible, corresponding to unstable attachments. This region arises as the electromagnetic holding force is further decreased.

This behavior illustrates the benefit of reducing the base component of the magnetic field at a decreasing rate. By prolonging the period of unstable attachment, the system gains additional time for detecting transitions in the pressure profile. This enhances the accuracy and reliability of determining the moment when additional ferromagnetic pieces are released or when the final attached piece begins to loosen.

FIG. 7 presents a pressure sensor response over time as a light ferromagnetic plate is gradually detached. The transitions are labeled as:
- Firm, where the plate is stably clamped.
- Loose, where the pressure signal decreases below a Threshold, corresponding to a loosening state.
- Firm again, indicating re-clamping after the controlled drop.

The annotations underscore that even small plates (e.g., under ^{~}1 kg) can be reliably detected and manipulated using the proposed method, without requiring sophisticated or high-resolution sensing. The system effectively identifies the subtle yet gradual detachment of the piece, allowing for accurate detection and control using standard sampling rates.

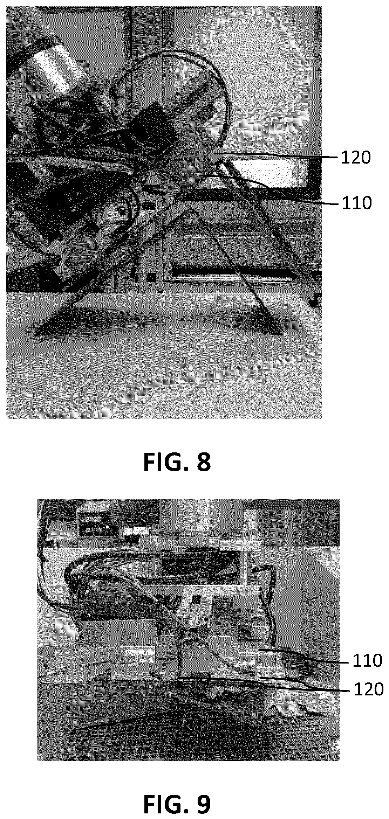

FIG. 8 illustrates an exemplary implementation of the system (100), showing a robotic arm equipped with the magnet arrangement (110) and the mechanical contact-sensing arrangement (120). In the illustrated example, one ferromagnetic piece is being released while another remains attached to the magnet arrangement (110).

This figure demonstrates the system's ability to perform controlled release, wherein multiple ferromagnetic pieces may initially be picked up, and excess pieces are selectively released through adjustment of the magnetic field. The remaining piece is reliably retained, despite variations in geometry, thickness, flexibility, or surface condition. This highlights the system's capability for autonomous singulation, even in unstructured environments and without operator intervention.

FIG. 9 illustrates how one ferromagnetic piece is released from the electromagnetic gripper while another piece remains attached. The figure clearly demonstrates how the electromagnetic gripper, comprising the magnet arrangement (110) and the mechanical contact-sensing arrangement (120), is able to successfully de-stack a single ferromagnetic piece from an unstructured collection of parts in a bin. This controlled detachment-also referred to as singulation-is achieved by gradually adjusting the magnetic field strength based on feedback from the contact-sensing arrangement, ensuring that only one piece remains attached while the others are released.

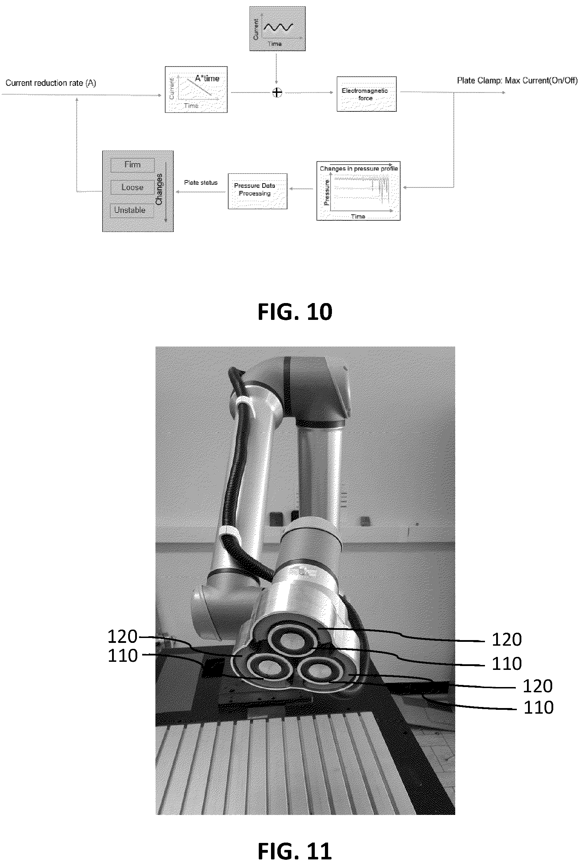

FIG. 10 illustrates an example of a control pipeline used to grasp a single ferromagnetic piece in accordance with embodiments of the present invention. The pipeline combines a time-dependent reduction in current (A·time) with an oscillatory current component to generate the applied electromagnetic force. Feedback from the pressure sensors is continuously processed to determine the plate status, which may be classified as "Firm", "Loose", or "Unstable." Based on this classification, the system dynamically adjusts the current reduction rate and activates full current when reclamping is necessary. The pressure data processing unit interprets changes in the pressure profile over time to detect detachment behavior and control the transition between the different phases of the picking operation.

FIG. 11 illustrates an embodiment of the invention in which the gripper comprises three cylindrical electromagnets (110) arranged in a triangular configuration and mounted on a robotic arm. Each electromagnet (110) is partly surrounded by a mechanical contact sensors (120), forming a sensing arrangement around each magnetic core. This configuration enables localized sensing and actuation, providing spatial resolution and selective control over the magnetic field in different regions of the gripper. Such an arrangement allows for adaptive grasping of irregularly shaped ferromagnetic pieces and supports the detection of partial contact, misalignment, or multiple attachments.

## Claims

1. A system (100) for picking at least one ferromagnetic piece from a stack or an unstructured collection, the system (100) comprising:
- a magnet arrangement comprising at least one electromagnet (110) configured to produce an adjustable magnetic field that attracts at least one ferromagnetic piece ,
- a mechanical contact-sensing arrangement comprising one or more contact sensors (120) positioned at or near an attraction surface of the at least one magnet arrangement (110), and configured to generate signals indicative of mechanical effects resulting from the electromagnetic attraction of the at least one ferromagnetic piece ,
- a controller (130) operatively connected to the at least one electromagnet (110) and the at least one contact sensor (120), the controller (130) being configured to:
(i) apply a time varying magnetic field comprising a base component and an oscillatory component superimposed on the base component, while monitoring the signals from the one or more contact sensors to detect when at least one ferromagnetic piece is present at the attraction surface,
(ii) generate the base component of the magnetic field such that at least one ferromagnetic piece attaches to the attraction surface,
(iii) reduce the base component of the magnetic field while monitoring the signals, so that any additional ferromagnetic piece is released while at least one ferromagnetic piece remains attached to the attraction surface, and
(iv) clamp the at least one remaining ferromagnetic piece by re-increasing the base component of the magnetic field when at least one of the signals is below a predefined threshold.

2. The system (100) according to claim 1, wherein the contact sensors (120) are tactile sensors.

3. The system (100) according to claim 2, wherein the tactile sensors (120) are deformable soft pressure sensors.

4. The system according to any of the previous claims, wherein the oscillatory component of the time-varying magnetic field has a frequency and amplitude selected to induce a detectable mechanical response of the at least one ferromagnetic piece by the contact-sensing arrangement.

5. The system (100) according to any one of the previous claims, wherein the controller (130) is configured to detect the presence of the at least one ferromagnetic piece by applying a windowed signal processing technique on the signals from the one or more contact sensors (120).

6. The system (100) according to any one of the previous claims, wherein the controller (130) is configured to actuate the magnet arrangement (110) with a force oscillation amplitude that is a predefined percentage of the maximum available electromagnetic force or a predefined percentage of the maximum drive current of the electromagnet, such that the magnetic field is strong enough to induce detectable mechanical responses in the ferromagnetic piece.

7. The system (100) according to any one of the previous claims, wherein the controller (130) is configured to reduce the base component of the magnetic field at a rate that decreases over time.

8. The system (100) according to any one of the previous claims, wherein the magnet arrangement comprises a plurality of electromagnets (110), each electromagnet being individually driven by the controller (130).

9. The system (100) according to claim 8, wherein the controller (130) is configured to compare signals from at least two of the contact sensors to determine where a ferromagnetic piece is attached, and wherein the controller (130) is configured to only actuate the electromagnets (110) where the ferromagnetic piece is attached.

10. The system (100) according to any of the previous claims, wherein the mechanical contact-sensing arrangement comprises a plurality of contact sensors (120) distributed along different regions of the attraction surface of the at least one electromagnet (110).

11. The system (100) according to any of the previous claims, wherein the mechanical contact-sensing arrangement comprises one or more contact sensors (120) that protrude beyond a plane defined by the attraction surface of the magnet arrangement.

12. A method (200) for picking at least one ferromagnetic piece from a stack or unstructured collection, the method comprising:
- providing (210) a magnet arrangement comprising at least one electromagnet (110) configured to produce an adjustable magnetic field that attracts at least one ferromagnetic piece,
- providing (220) a mechanical contact-sensing arrangement comprising one or more contact sensors (120) at or near an attraction surface of the at least one electromagnet (110), wherein the one or more contact sensors (120) are configured for generating signals indicative of mechanical effects resulting from the electromagnetic attraction of the at least one ferromagnetic piece,
- applying (230) a time varying magnetic field comprising a base component and an oscillatory component superimposed on the base component, while monitoring the signals from the one or more contact sensors to detect when at least one ferromagnetic piece is present at the attraction surface,
- generating (240) the base component of the magnetic field such that at least one ferromagnetic piece attaches to the attraction surface,
- reducing (250) the base component of the magnetic field while monitoring the at least one signal so that any additional ferromagnetic piece is released while at least one ferromagnetic piece remains attached to the attraction surface, and
- clamping (260) the at least one remaining ferromagnetic piece by re-increasing the base component of the magnetic field when at least one of the signals is below a predefined threshold.

13. The method (200) according to claim 12, wherein the step of reducing (250) the base component of the magnetic field is done in three phases:
- a first phase (251) at a first decrease rate wherein a first ferromagnetic piece is dropped,
- a second phase (252) at a second decrease rate smaller than the first decrease rate wherein one or more subsequent ferromagnetic pieces are dropped,
- a third phase (253) at a third decrease rate smaller than the second decrease rate, until at least one of the signals of the one or more contact sensors decreases below the predefined threshold.

14. The method (200) according to any of claims 12 or 13, further comprising determining a spatial distribution of the contact pressure signals from the one or more contact sensors (120) to identify a position or orientation of the attached ferromagnetic piece.

15. The method (200) according to any of the claims 12 to 14, further comprising processing the signals from the one or more contact sensors using a signal analysis technique.
